# EUROPÄISCHE PATENTSCHRIFT

(11) **EP 2 557 043 B1**
(45) Veröffentlichungstag und Bekanntmachung des Hinweises auf die Patenterteilung: **19.02.2014**
(21) Anmeldenummer: 11006546.3
(22) Anmeldetag: 09.08.2011
(51) Int. Cl.: B65B 35/38

(54) **Sauggreiferanordnung**
Suction gripper assembly
Agencement de poignée d'aspiration

(43) Veröffentlichungstag der Anmeldung: 13.02.2013
(73) Patentinhaber: Multivac Sepp Haggenmüller GmbH & Co. KG, 87787 Wolfertschwenden (DE)
(72) Erfinder: Hümmeler, Michael, 57368 Lennestadt (DE)
(74) Vertreter: Grünecker, Kinkeldey, Stockmair & Schwanhäusser

(56) Entgegenhaltungen:
- WO-A1-95/05312
- CN-A- 101 580 138
- DE-U1- 8 809 060
- DE-U1- 29 905 552
- GB-A- 2 003 824
- US-A- 3 168 204
- US-A- 4 905 456
- US-A- 5 079 903

## Beschreibung

Die Erfindung bezieht sich eine Sauggreiferanordnung mit mehreren in einer Reihe angeordneten Sauggreifarmen, die an ihren unteren Enden jeweils einen Sauggreifkopf aufweisen.

Eine solche Sauggreiferanordnung ist aus der US 5,943,842 A bekannt. Diese Sauggreiferanordnung wird dazu eingesetzt, eine Gruppe von auf einem Förderband bereitgestellten Artikeln anzusaugen und vom Förderband abzuheben. Durch Bewegen der Sauggreiferanordnung kann die Gruppe von Artikeln anschließend transportiert und an einer gewünschten Stelle wieder abgesetzt werden. Bei der Sauggreifanordnung der US 5,943,842 A ist darüber hinaus schon vorgesehen, dass die Anordnung der Gruppe von erfassten Artikeln während des Transports durch die Sauggreiferanordnung verändert werden kann. Zu diesem Zweck sind die Sauggreiferarme schwenkbar gelagert. Ihre Schwenkbewegung kann ausgenutzt werden, um die Abstände zwischen benachbarten Artikeln während des Transports durch die Sauggreiferanordnung zu verringern. Dies ermöglicht es, die Gruppe von Artikeln in kleinere Behälter oder Umverpackungen einzusetzen.

Ähnliche Sauggreiferanordnungen, die zum Teil ebenfalls schon Möglichkeiten zum Verändern der Abstände zwischen einander benachbarten Artikeln einer Gruppe von erfassten Artikeln vorsehen, gehen aus der US 4,832,180, der US 3,934,920, der US 3,506,140, der US 3, 168,204 oder der US 5,743,068 A hervor.

Aufgabe der vorliegenden Erfindung ist es, die Handhabung von Sauggreiferarmen in Bezug auf Wartung oder Reinigung zu verbessern.

Diese Aufgabe wird gelöst durch eine Sauggreiferanordnung mit den Merkmalen des Anspruchs 1. Vorteilhafte Weiterbildungen der Erfindung sind in den Unteransprüchen angegeben.

Die Erfindung bezieht sich auf eine Sauggreiferanordnung mit mehreren in einer Reihe angeordneten Sauggreiferarmen, bei der mindestens einer der Sauggreiferarme über einen Hebel mit einem Stellglied verbunden ist, wobei sowohl zwischen dem Hebel und dem Sauggreiferarm, als auch zwischen dem Hebel und dem Stellglied jeweils ein Drehgelenk gebildet ist, und wobei der Hebel aus mindestens zwei Hebelteilen zusammengesetzt ist. Gegenüber Varianten, bei denen statt eines Drehgelenks beispielsweise nur eine Materialschwächung vorgesehen ist, um eine Art Filmscharnier zu bilden, hat die erfindungsgemäße Sauggreiferanordnung mit Drehgelenken den Vorteil einer deutlich höheren Stabilität und Langlebigkeit. Es ist damit zu rechnen, dass die erfindungsgemäße Sauggreiferanordnung deutlich seltener Materialbrüche erleidet und ausgetauscht werden muss. Wenn dennoch eines der Drehgelenke ermüden sollte, muss nicht mehr die gesamte Sauggreiferanordnung ersetzt werden, sondern es genügt, einen am Drehgelenk angreifenden Hebel zu ersetzen. Dies kann sehr leicht dadurch geschehen, dass der Hebel in seine mindestens zwei Hebelteile aufgetrennt und aus der Sauggreiferanordnung entnommen wird. Ebenso leicht kann ein neuer, ebenfalls mehrteiliger Hebel in die Sauggreiferanordnung eingesetzt und zu einem Hebel zusammengesetzt werden. Auf diese Weise wird die Wartung der Sauggreiferanordnung kostengünstiger und der Betrieb der Sauggreiferanordnung so insgesamt wirtschaftlicher.

Besonders leicht lässt sich der mehrteilige Hebel zusammensetzen, wenn die Verbindung zwischen den Hebelteilen in Form einer Rastverbindung ausgeführt ist.

Weitere Vorteile können sich ergeben, wenn die Verbindung zwischen den Hebelteilen als Sollbruchstelle oder als Soll-Trennstelle ausgeführt ist. Dies hat den Vorteil, dass bei einer Überlastung der Sauggreiferanordnung zunächst der Hebel kaputt geht, der ohnehin als primäres Austauschteil konstruiert ist. Eine Soll-Trennstelle hat dabei gegenüber einer Sollbruchstelle den zusätzlichen Vorteil, dass der Hebel nicht dauerhaft zerstört wird, sondern nur die Überlast aufnimmt und anschließend wieder zusammengesetzt werden kann.

Ähnliche Vorteile ergeben sich dadurch, dass wenigstens einer, vorzugsweise alle der Sauggreiferarme mehrteilig ausgebildet sind. Auf diese Weise können bei Bedarf lediglich einzelne Teile der Sauggreifarme ausgetauscht oder zu Reinigungszwecken entnommen werden, ohne stets die gesamte Sauggreiferanordnung austauschen oder reinigen zu müssen. In analoger Weise zu den Hebeln können auch die Verbindungen zwischen den Teilen oder Abschnitten eines mehrteiligen Sauggreiferarms als Sollbruchstelle oder als Soll-Trennstelle ausgebildet sein.

Um eine leichte Handhabung der mehrteiligen Sauggreiferarme zu ermöglichen, ist zudem zwischen verschiedenen Abschnitten eines mehrteiligen Sauggreiferarms ein schlüsselloser Schnellverschluss (wie er beispielsweise als Klick-Verschluss für Rucksackgurte bekannt ist) oder ein Rastverschluss vorgesehen.

Günstig ist es ferner, wenn an oder in diesem Schnell- oder Rastverschluss eine Dichtung vorgesehen ist, um das Innere des Sauggreiferarms gegenüber der Umgebung abzudichten. Dies hat den Vorteil, dass keine Druckverluste auftreten, wenn durch die Sauggreiferarme hindurch ein Vakuum an die Sauggreifköpfe angelegt wird.

Für die Herstellung der Sauggreiferarme, der Hebel und/oder einer gemeinsamen Basis für die Sauggreiferarme hat sich als Material ein Sinterwerkstoff als zweckmäßig erwiesen. Dieses Material hat den Vorteil, für den Einsatz in Verbindung mit Lebensmitteln geeignet zu sein, als auch den weiteren Vorteil, dass mittels des Sinterns vergleichsweise komplizierte Strukturen erzeugt werden können.

Wenn ein Stellglied zum Bewirken einer Schwenkbewegung mehrerer schwenkbarer Sauggreiferarme vorgesehen ist, ist dieses Stellglied vorzugsweise axial zu einem nicht schwenkbaren, vorzugsweise mittleren Sauggreiferarm beweglich. Mit anderen Worten könnte bei einer ungeraden Anzahl von in einer Reihe angeordneten Sauggreiferarmen der mittlere Sauggreiferarm fest sein, während sich die äußeren Sauggreiferarme schwenkbar bewegen können. Das Stellglied ist dann axial zu diesem mittleren Sauggreiferarm beweglich. Auf diese Weise wird auch die Schwenkbewegung der gesamten Gruppe von Sauggreiferarmen symmetrisch.

Günstig ist es dabei, wenn dieses Stellglied entlang einer Führung beweglich ist, um die Präzision der Schwenkbewegung zu erhöhen.

Schließlich ergeben sich weitere Vorteile, wenn in mindestens einigen Sauggreiferarmen eine Vakuumleitung mit durchgehend konstantem Querschnitt vorgesehen ist, da dies Druckunterschiede in den Sauggreiferarmen und eine übermäßige Geräuschentwicklung verhindert. Vorzugsweise sind die Querschnitte der Vakuumleitungen in allen Sauggreiferarmen gleich und konstant. Denkbar wäre es jedoch auch, dass zum Beispiel beim mittleren Sauggreiferarm eine Verzweigung der Vakuumleitung vorgesehen ist, um die Symmetrie der Sauggreiferanordnung zu verbessern.

Eine Variante der Sauggreiferanordnung zeichnet sich dadurch aus, dass die Anlageflächen der Sauggreifköpfe einander benachbarter Sauggreiferarme in unterschiedlichen Ebenen angeordnet sind, und zwar insbesondere in parallel zueinander versetzten Ebenen beziehungsweise auch bei zueinander parallel ausgerichteten Sauggreiferarmen. Dies bietet den Vorteil, dass von benachbarten Sauggreiferarmen erfasste Artikel automatisch in unterschiedlichen Ebenen oder Höhen liegen, so dass ein späteres Komprimieren des Gesamtvolumens der Gruppe von erfassten Artikeln durch Übereinanderschieben benachbarter Artikel erheblich erleichtert wird.

Vorzugsweise beträgt der Versatz zwischen den (parallelen) Ebenen der Anlageflächen der Sauggreifköpfe einander benachbarter Sauggreiferarme von 0,1 Millimeter bis 2,0 Millimeter. Je nach Fläche und Gewicht der zu erfassenden Artikel ist dieser Versatz klein genug, um beim Ansaugen und Ergreifen der Artikel kaum Unterschiede in der Ansaugkraft auftreten zu lassen. Auch Artikel, die bedingt durch die Höhenunterschiede zwischen den Anlageflächen der Sauggreifköpfe beim Ansaugen einen etwas weiteren Weg zurückzulegen haben, können auf diese Weise genauso schnell und positionssicher ergriffen werden.

Besonders günstig ist es, wenn die Anlageflächen der Sauggreifköpfe jedes zweiten Sauggreiferarms in einer gemeinsamen Ebene liegen. Dies führt dazu, dass die Anlageflächen aller Sauggreifköpfe jeweils in einer von insgesamt nur zwei verschiedenen Ebenen liegen. Auf diese Weise werden Höhenunterschiede zwischen den Anlageköpfen über die gesamte Sauggreiferanordnung minimiert.

Als besonders zweckmäßig hat es sich herausgestellt, wenn die Anlageflächen der Sauggreifköpfe geneigt sind gegenüber einer Förderebene, von der die Artikel entnommen werden, oder gegenüber einer Ebene einer für wenigstens einige Sauggreiferarme gemeinsamen Basisplatte, beziehungsweise ganz allgemein gegenüber der Horizontalen. Das Merkmal solcherart geneigt angeordneter Anlageflächen der Sauggreifköpfe kann auch schon unabhängig von dem Merkmal in unterschiedlichen Ebenen angeordneter Anlageflächen der Sauggreifköpfe einander benachbarter Sauggreiferarme vorteilhaft sein. Die geneigten Anlageflächen der Sauggreifköpfe führen dazu, dass auch die von den Sauggreifköpfen erfassten Artikel sofort geneigt angeordnet werden. Insbesondere bei Artikeln wie Verpackungen mit Verpackungsrändern, die zunächst in einer gemeinsamen horizontalen Ebene erzeugt werden, kann diese geneigte Anordnung der Artikel ein Über- oder Untereinanderschieben benachbarter Reihen von Artikeln und damit die Komprimierung des Gesamtvolumens einer Gruppe von erfassten Artikeln erheblich erleichtern.

Vorzugsweise sind die Anlageflächen der Sauggreifköpfe in diesem Fall um circa 2° bis 10° geneigt angeordnet, vorzugsweise in einem Bereich von 3° bis 5°.

Im Folgenden wird ein vorteilhaftes Ausführungsbeispiel der Erfindung anhand einer Zeichnung näher erläutert. Im Einzelnen zeigen:
- Figur 1:: eine perspektivische Ansicht eines Sauggreifersystems mit fünf hintereinander gestaffelten, erfindungsgemäßen Sauggreiferanordnungen,
- Figur 2:: eine perspektivische Ansicht einer einzelnen, erfindungsgemäßen Sauggreiferanordnung,
- Figur 3:: eine Vorderansicht der Sauggreiferanordnung,
- Figur 4:: eine Seitenansicht der Sauggreiferanordnung,
- Figur 5:: eine perspektivische Ansicht eines vereinzelten unteren Abschnitts eines Sauggreiferarms,
- Figur 6:: eine Draufsicht auf eine Gruppe von 5 x 5 zu ergreifenden Artikeln vor dem Ergreifen,
- Figur 7:: eine Vergrößerung aus Figur 6,
- Figur 8:: die erfassten Artikel nach dem Erzeugen einer Überlappung benachbarter Artikel in einer ersten Richtung,
- Figur 9:: eine Vergrößerung aus Figur 8,
- Figur 10:: die Gruppe von Artikeln nach dem Erzeugen einer Überlappung auch in der zweiten Richtung,
- Figur 11:: eine Vergrößerung aus Figur 10,
- Figur 12:: eine horizontale Ansicht der überlappten Gruppe von Artikeln quer zur Transportrichtung,
- Figur 13:: eine Seitenansicht der Gruppe von Artikeln in Transportrichtung,
- Figur 14.: eine perspektivische Ansicht der in zwei Raumrichtungen überlappten Gruppe von Artikeln und
- Figur 15:: ein vergrößerter Ausschnitt aus Figur 14.

Gleiche Komponenten sind in den Figuren durchgängig mit gleichen Bezugszeichen versehen.

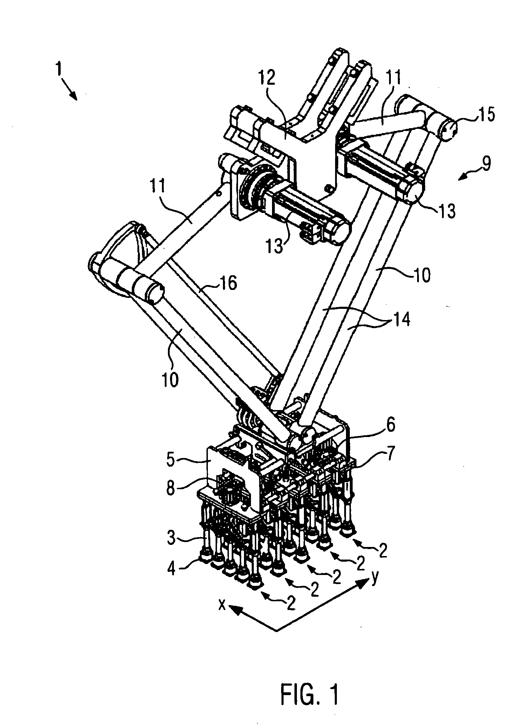

Figur 1 zeigt ein Sauggreifersystem 1. Dieses Sauggreifersystem 1 verfügt über fünf äquidistant hintereinander gestaffelte, erfindungsgemäße Sauggreiferanordnungen 2, die ihrerseits wiederum eine Reihe von fünf nebeneinander angeordneten Sauggreiferarmen 3 aufweisen. Am unteren Ende des Sauggreifarms 3 ist jeweils ein Sauggreifkopf 4 vorgesehen, an den ein einzelner Artikel angesaugt und durch das Ansaugen ergriffen werden kann. Die Anordnung der insgesamt 5 x 5 Sauggreifköpfe 4 befindet sich auf den Gitterpunkten eines rechtwinkligen Gitters. Dabei liegen die Sauggreifköpfe 4 einer Reihe von Sauggreiferarmen 3 einer einzelnen Sauggreiferanordnung 2 in x-Richtung, während die mehreren Sauggreiferanordnungen 2 in y-Richtung hintereinander gestaffelt sind.

Oberhalb der Sauggreiferanordnungen 2 befindet sich ein die Sauggreiferanordnungen 2 tragendes Gestell 5. Dieses Gestell 5 verfügt über wenigstens zwei parallele, in y-Richtung angeordnete Stangen 6. Während die mittlere Sauggreiferanordnung 2 bezüglich der Stangen 6 ortsfest ist, befindet sich ein Gleiter 7 an jeder der anderen vier Sauggreiferanordnungen 2 im Eingriff mit einer der Stangen 6. Durch das Verschieben des Gleiters 7 entlang der Stangen 6 sind die äußeren vier Sauggreiferanordnungen 2 entlang der Stangen 6 beweglich. Durch eine zwischen den Stangen 6 angeordnete Mechanik 8 ist dafür gesorgt, dass die fünf Sauggreiferanordnungen 2 bei dieser Bewegung stets äquidistant zueinander bleiben, auch wenn sich die Abstände zwischen zwei benachbarten Sauggreiferanordnungen 2 verändern können.

Das gesamte Gestell 5 mit den Sauggreiferanordnungen 2, wird von einer zweiarmigen Scara-Roboteranordnung 9 getragen. Jeder der beiden Roboterarme 10 umfasst einen einzelnen oberen Arm 11, der durch einen an einem Rahmen 12 befestigten Drehantrieb 13 schwenkbar ist. Dabei ist jedem der beiden oberen Arme 11 der beiden Roboterarme 10 ein eigener Drehantrieb 13 zugeordnet. Ferner verfügt jeder der Roboterarme 10 über einen zweiteiligen unteren Arm 14. Während die unteren Arme 14 über ein Drehgelenk 15 mit dem jeweiligen oberen Arm 11 verbunden ist, sind die unteren Arme 14 an ihrem unteren Ende über ein Drehgelenk am Gestell 5 befestigt. Das Drehen der oberen Arme 13 mittels der Drehantriebe 13 bewirkt ein Anheben, Absenken oder Bewegen des Gestells 5 und der damit verbundenen Sauggreiferanordnungen 2.

An einem der beiden Roboterarme 10 ist ferner eine Steuerstange 16 vorgesehen. Sie verläuft parallel zu den beiden unteren Armen 14 dieses Roboterarms 10. Auf diese Weise kann die Steuerstange 16 dafür sorgen, dass das Gestell 5 immer horizontal oder parallel zu einem Transportband ausgerichtet bleibt, auch wenn sich der Roboter 9 bewegt.

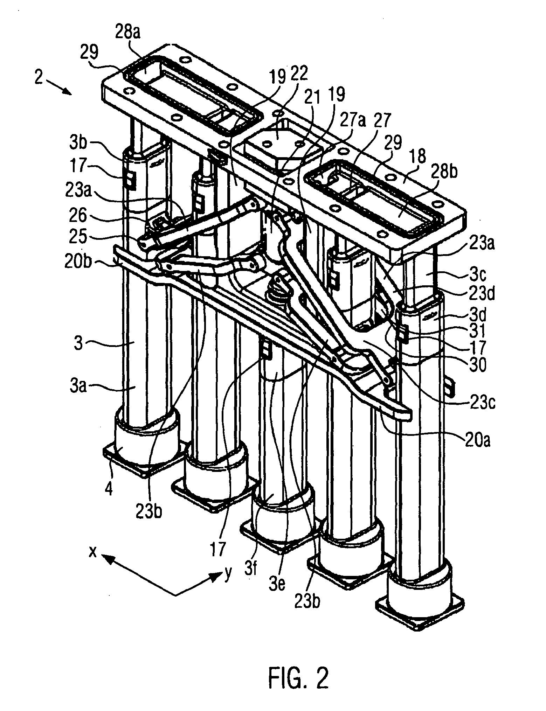

Figur 2 zeigt eine einzelne Sauggreiferanordnung 2. Diese verfügt über fünf in einer Reihe in x-Richtung hintereinander angeordneter Sauggreiferarme 3. Jeder der fünf Sauggreiferarme 3 ist zweiteilig aufgebaut. Ein Schnellverschluss 17 an jedem Sauggreiferarm 3 dient dazu, einen unteren Abschnitt 3a des Sauggreiferarms 3 mit einem oberen Abschnitt 3b zu verbinden. Der untere Abschnitt 3a hat dabei einen etwa ovalen Querschnitt und trägt an seinem unteren Ende den breiteren, im Querschnitt kreisförmigen Sauggreifkopf 4. Der obere Abschnitt 3b der vier äußeren Sauggreiferarme 3 hat seinerseits in einem obersten Bereich 3c geringere Außenabmessungen als in einem unteren Bereich 3d. Zusammen mit einer gewissen Flexibilität des Materials der Sauggreiferarme 3 führt dies dazu, dass die äußeren vier Sauggreiferarme 3 um den oberen Bereich 3c schwenkbar sind. Bedingt durch die ovale Form der Sauggreiferarme 3 und insbesondere dieser oberen Bereiche 3c ist ein Schwenken jedoch nur in Richtung x möglich, nicht aber in Richtung y.

Eine Basis 18 bildet das obere Ende der dargestellten Sauggreiferanordnung 2. Diese Basis 18 definiert eine horizontale Ebene. Von der Basis 18 erstrecken sich alle fünf Sauggreiferarme nach unten.

Unterhalb der Basis 18 befindet sich zwischen dem zweiten und vierten Sauggreiferarm 3 ein U-förmiger Bügel 19, der an seinem unteren Ende einen rechten und einen linken Ausläufer 20a und 20b aufweist. Mittig auf seiner Unterseite trägt der U-förmige Bügel 19 einen Sauggreiferarmabschnitt 3e, in den ein unterer Abschnitt 3f des mittleren Sauggreiferarms 3 durch einen schlüssellosen Schnellverschluss 17 einrastbar ist.

Innerhalb des U-förmigen Bügels 19 befindet sich ein Stellglied 21. Das Stellglied 21 ist über einen nicht dargestellten, an eine relativ zur Basis 18 vertikal bewegbare Platte 22 angeflanschten Antrieb in vertikaler Richtung bewegbar.

Zwischen dem Stellglied 21 und jedem der vier äußeren Sauggreiferarme 3 befindet sich jeweils ein Hebel 23. Jeder der Hebel 23 ist über ein inneres Drehgelenk 24 am Stellglied 21 gelagert, während das gegenüberliegende Ende des Hebels 23 über ein äußeres Drehgelenk 25 mit einem Ausleger 26 eines der vier äußeren Sauggreiferarme 3 verbunden ist. Die Hebel 23a für die äußersten Sauggreiferarme 3 liegen dabei oberhalb der Hebel 23b für die beiden inneren Sauggreifarme 3. Auch die inneren Drehgelenke 24 der beiden oberen Hebel 23a für die äußersten Sauggreifarme 3 liegen am Stellglied 21 oberhalb der inneren Drehgelenke 24 der beiden anderen Hebel 23b. An den äußersten Sauggreiferarmen 3 befinden sich die Ausleger 26 für die äußeren Drehgelenke 25 auf der inneren, also zum mittleren Sauggreiferarm 3 gewandten Seite, während die Ausleger 26 an den zweiten und vierten Sauggreiferarmen 3 jeweils auf der äußeren, d. h. vom mittleren Sauggreiferarm 3 abgewandten Seite liegen.

Mittig erstreckt sich durch jeden der Sauggreiferarme 3 eine Vakuumleitung 27, die einen von einen externen Vakuumquelle erzeugten Unterdruck an jeden der Sauggreifköpfe 4 anlegt. Innerhalb jedes der vier äußeren Sauggreiferarme 2 hat die Vakuumleitung 27 von oben nach unten einen konstanten, kreisförmigen oder ovalen Querschnitt. Der mittlere Sauggreiferarm 3 hat in seinem unteren Abschnitt 3f eine Vakuumleitung 27 mit dem gleichen Querschnitt wie die Vakuumleitungen 27 in den vier äußeren Sauggreiferarmen 3. Im mittleren Sauggreiferarm 3 verzweigt sich jedoch die Vakuumleitung 27 nach oben, so dass durch jeden der beiden Armen des U-förmigen Bügels 19 eine eigene Vakuumleitung 27a mit jeweils der halben Querschnittsfläche geführt ist.

Auf jeder Seite der Basis 18 ist jeweils eine Vertiefung oder Mannigfaltigkeit 28a, 28b vorgesehen. In jeder der Mannigfaltigkeiten 28a, 28b werden jeweils die Vakuumleitungen 27 der beiden äußeren Sauggreiferarme 3 und eine der beiden Vakuumleitungen 27a mit halber Querschnittsfläche für den mittleren Sauggreiferarm 3 zusammengeführt, so dass an die Basis 18 insgesamt nur zwei externe Vakuumleitungen angeschlossen werden müssen. In eine ringförmige Nut 29 der Mannigfaltigkeiten 28a, 28b herum kann ein Dichtungselement eingelegt werden, um die Vakuumleitungen 27 abzudichten.

Eine Trennlinie 30 deutet an, dass jeder der Hebel 23 zweiteilig aufgebaut ist, nämlich aus einem ersten Teil 23c und einem komplementären zweiten Teil 23d. Die beiden Hebelteile 23c, 23d können durch eine Steck- und insbesondere eine Rastverbindung ineinander gesteckt werden. Zusammen bilden sie einen Hebel 23, der jeweils eine mittige Öffnung 31 aufweist, die vom zweiten beziehungsweise vierten Sauggreiferarm 3 und jeweils einem vertikalen Abschnitt des U-förmigen Bügels 19 durchquert wird. Die Trennlinie 30 kann als Sollbruchlinie oder als Soll-Trennlinie 30 ausgebildet sein, entlang derer sich die beiden Hebelteile 23c, 23d voneinander trennen, wenn die Belastung der Sauggreiferanordnung 2 und insbesondere des Hebels 23 einen bestimmten Wert überschreitet.

Besonders günstig ist es, wenn die Steck- oder Rastverbindung in einer Richtung quer zur Längsrichtung des Hebels zusammengesteckt wird. Dies gestattet es, dass der Hebel in seiner Längsrichtung besonders hohe Zug- oder Druckkräfte übertragen kann, während er andererseits bei zu hohen Kräften in Querrichtung als Sollbruchelement dient und an der Trennstelle 30 aufgetrennt wird. Zur Verstärkung der Steckverbindung an der Trennlinie 30 könnten auch Stifte, beispielsweise metallische Stifte, vorgesehen sein, die sich ihrerseits quer zur Längsrichtung des Hebels 23 erstrecken.

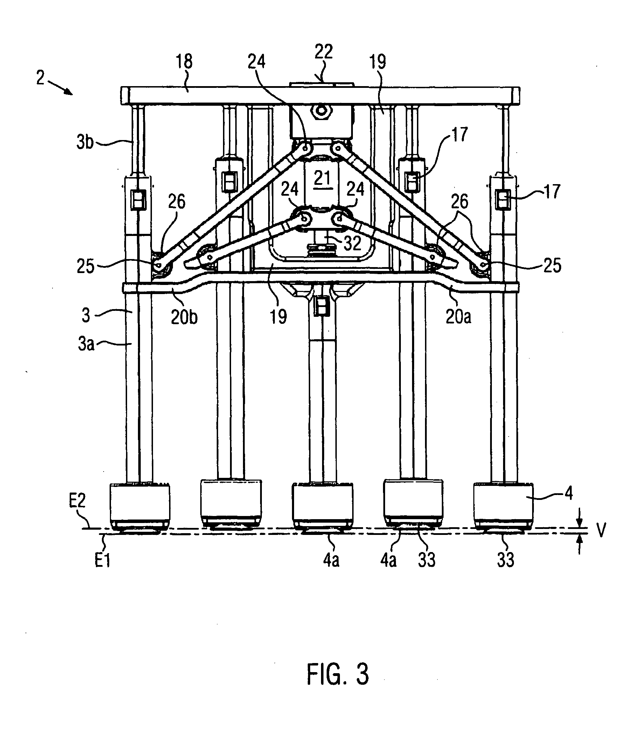

Figur 3 zeigt die Sauggreiferanordnung 2 in einer Vorderansicht. Zu erkennen ist hier insbesondere, dass das Stellglied 21 auf einer Führung 32 beweglich gelagert ist, so dass es sich axial relativ zum mittleren Sauggreiferarm 3 auf und ab bewegen kann. Bei der Führung 32 handelt es sich im vorliegenden Ausführungsbeispiel um eine vertikal ausgerichtete Stange, die auf der Innenseite des U-förmigen Bügels 19 befestigt ist, und auf der das Stellglied 21 gleitet. Dadurch wird die vertikale Bewegung des Stellglieds 21 erheblich präziser als ohne eine solche Führung.

An den unteren Enden der Sauggreifköpfe 4 befinden sich jeweils ebene Anlageflächen 33, an die sich ein zu ergreifender Artikel mit einer vorzugsweise ebenfalls ebenen Fläche anlegen kann. In Figur 3 ist dabei zu erkennen, dass sich bei der erfindungsgemäßen Sauggreiferanordnung 2 die Anlageflächen 33 der Sauggreifköpfe 4 einander benachbarter Sauggreiferarme 3 nicht in derselben, sondern in unterschiedlichen Ebenen befinden, wenn die Sauggreiferarme 3 parallel zueinander ausgerichtet sind beziehungsweise wenn die Ebenen parallel zueinander angeordnet sind. Die Anlageflächen 33 der Sauggreifköpfe des mittleren und der beiden äußersten Sauggreiferarme 3 befinden sich in einer ersten Ebene E1, die durch eine strichpunktierte Linie dargestellt ist. Die Anlageflächen 33 der Sauggreifköpfe der beiden anderen, d. h. des zweiten und vierten Sauggreifarms 3, befinden sich hingegen in einer anderen Ebene E2, die durch eine gestrichelte Linie dargestellt ist. Die erste Ebene E1 liegt um einen Versatz V niedrigerer als die zweite Ebene E2. Der Versatz V zwischen diesen Ebenen beträgt von 0,1 Millimeter bis 2,0 Millimeter, beispielsweise 1,0 Millimeter. Bemerkenswert ist auch, dass bei der in Figur 3 gezeigten Sauggreiferanordnung 2 die Anlageflächen 33 der Sauggreifköpfe 4 jedes zweiten Sauggreiferarms 3 in einer jeweils gemeinsamen Ebene E1 beziehungsweise E2 liegen.

Innerhalb jedes Sauggreifkopfs 4 befindet sich ein flexibler, etwa zieharmonika-artiger Saugrüssel 4a. Dieser ragt nach unten über die Anlagefläche 33 hinaus. Insbesondere kann der Saugrüssel 4a dabei über eine Förderebene hinaus nach unten vorstehen, in der sich die Oberfläche der zu ergreifenden Artikel befindet. Beim Anlegen des Saugrüssels 4a an die zu ergreifenden Artikeln wird der Saugrüssel 4a bereits zusammengestaucht. Beim Anlegen eines Unterdrucks an den Sauggreifköpfen 4 zieht sich der Saugrüssel 4a in den Saugkopf 4 hinein, bis der Artikel mit seiner Oberfläche in Anlage an die Anlagefläche 33 des Sauggreifkopfs 4 gelangt.

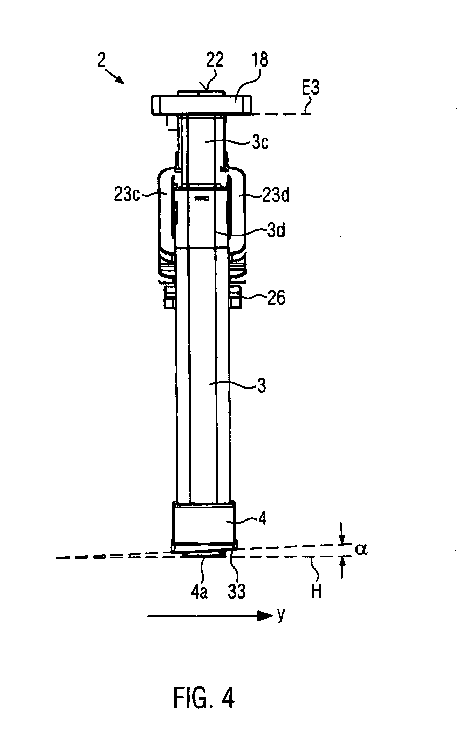

Figur 4 zeigt die Sauggreiferanordnung 2 in der Seitenansicht. Zu erkennen ist nun, dass die Anlagefläche 33 der Sauggreifköpfe 4 nicht in einer horizontalen Ebene liegt, sondern unter einem Winkel α in y-Richtung gegenüber der Horizontalen H geneigt ist. Dieser Neigungswinkel α kann beispielsweise 3° bis 10° betragen, vorzugsweise etwa 5°. Bei der Horizontalen kann es sich um die Ebene (beziehungsweise die Förderebene) handeln, in der die zu ergreifenden Artikel hergestellt und von der aus sie von den Sauggreifköpfen 4 ergriffen werden. Der Neigungswinkel α der Anlagefläche 33 muss jedoch nicht relativ zu der Förderebene H gemessen werden, sondern er kann gleichermaßen innerhalb der Sauggreiferanordnung 2 relativ zu einer von der Basis 18 definierten Ebene E3 gemessen werden.

Auch in Figur 4 ist zu sehen, dass der Saugrüssel 4a über die Anlagefläche 33 hinaus nach unten vorsteht. Der untere Rand des Saugrüssels 4a befindet sich dabei in der Förder- oder Transportebene H; er kann jedoch auch nach unten über diese Ebene H hinaus vorstehen.

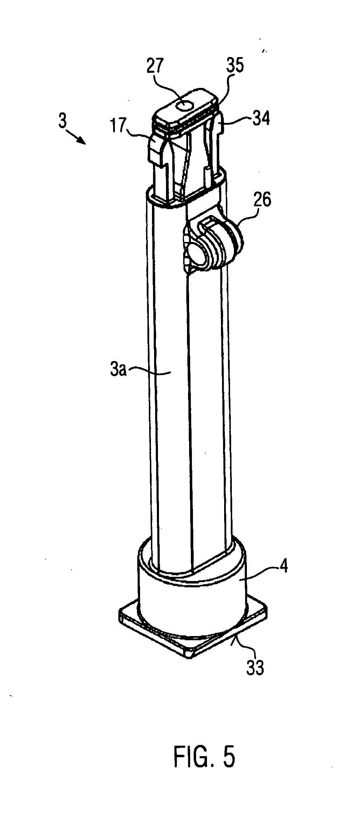

Figur 5 zeigt in perspektivischer Ansicht den unteren Abschnitt 3a eines der beiden äußeren Sauggreiferarme 3. Zu erkennen ist hier insbesondere der Ausleger 26, an dem das äußere Drehgelenk 25 mit dem zugeordneten Hebel 23 gebildet wird. Zu erkennen ist ferner der schlüssellose Schnellverschluss 17 mit zwei seitlichen Rasthaken 34, die in eine entsprechende Öffnung im oberen Abschnitt 3b des Sauggreiferarms 3 einschnappen können. Eine Dichtung 35 sorgt dafür, dass nach dem Einführen des unteres Abschnitts 3a in den oberen Abschnitt 3b des jeweiligen Sauggreiferarms 3 die Vakuumleitung 27 im Inneren des Sauggreiferarms 3 hermetisch gegenüber der Umgebung abgedichtet ist.

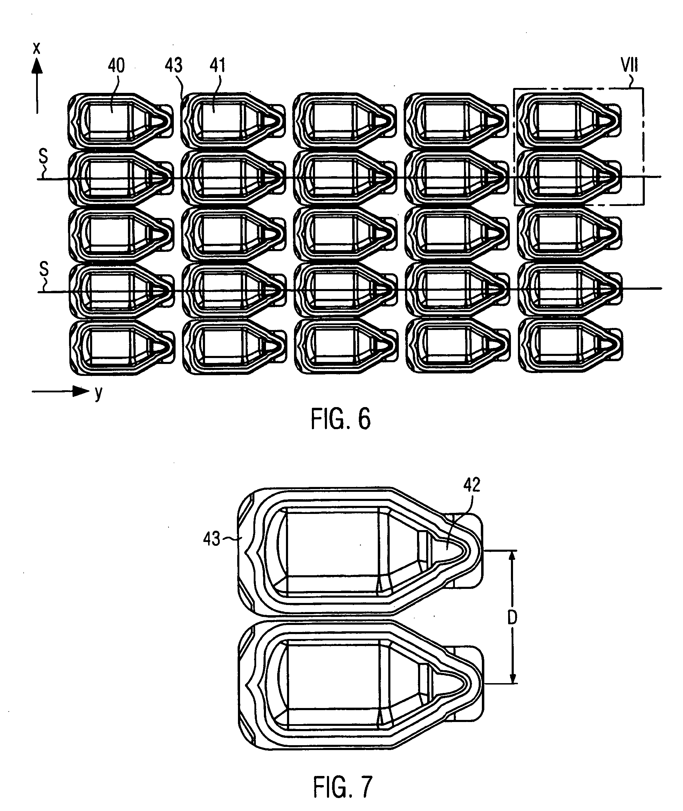

Figur 6 zeigt ein Feld von fünf mal fünf zu ergreifenden Artikeln 40. Im vorliegenden Ausführungsbeispiel handelt es sich bei den Artikeln 40 um Verpackungen, insbesondere sogenannte dip-and-squeeze-Packungen für pastöse Produkte wie beispielsweise Mayonnaise oder Ketchup. Diese Verpackungen werden hergestellt, indem in einer Tiefziehverpackungsmaschine in eine Unterfolie Verpackungsmulden 41 tiefgezogen werden, die anschließend mit einem Produkt befüllt und in bekannter Weise mit einer ebenen Deckelfolie verschlossen werden. Jede Verpackung 40 verfügt über einen Rand 43, der in der Ebene der gemeinsamen Deckelfolie liegt.

Figur 6 zeigt die in einer gemeinsamen, horizontalen Förderebene H befindlichen Artikel 40 in einer Situation unmittelbar nachdem sie durch ein Komplettschnittwerkzeug aus der gemeinsamen Folienbahn ausgestanzt wurden. Zwischen zwei benachbarten Verpackungen 40 befinden sich sowohl in x-Richtung, als auch in y-Richtung Abstände.

Figur 7 zeigt eine Vergrößerung des in Figur 6 mit VII bezeichneten Ausschnitts. Ein Abstand D in x-Richtung zwischen vergleichbaren Elementen (wie einer Tülle 42) bei benachbarten Verpackungen 40 kann beispielsweise etwa 50 Millimeter betragen.

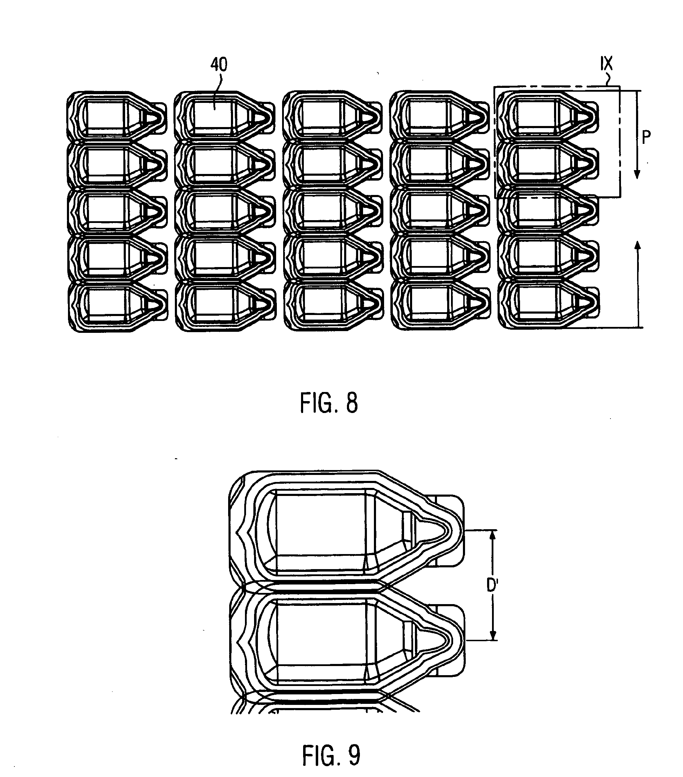

Figur 8 zeigt eine Draufsicht auf die Gruppe von fünf x fünf Verpackungen 40, nachdem diese von dem Sauggreifersystem 1 ergriffen wurden. Jede der in y-Richtung hintereinander gestaffelten Reihen von in x-Richtung nebeneinander liegenden Verpackungen 40 wurde dabei mittels einer eigenen Sauggreiferanordnung 2 erfasst. Die in Figur 8 gezeigten Pfeile P deuten an, dass sich die Abstände einander benachbarter Verpackungen 40 in x-Richtung verringert haben.

Zu erkennen ist dies auch in Figur 9, die den in Figur 8 mit IX bezeichneten Ausschnitt in einer Vergrößerung darstellt. Der Abstand D' zwischen den Spitzen der Tüllen 42 einander benachbarter Verpackungen 40 beträgt hier beispielsweise nur noch 43 Millimeter. Die Überlappung einander benachbarter Verpackungen 40 in x-Richtung wird dadurch ermöglicht, dass die in Figur 6 mit durchgezogenen Linien hervorgehobenen Spuren S1, S2 von Verpackungen 40, d. h. die zweite und die vierte Spur von oben, wegen der unterschiedlichen Höhen der Anlageflächen 33 der Saugköpfe 4 etwas höher liegen als die Verpackungen in den übrigen Spuren, siehe die Erläuterungen zu Figur 3. Erreicht wird das Verringern des Abstands der Verpackungen bis hin zu einer Überlappung in x-Richtung durch das Zusammenschwenken der Sauggreiferarme 3 einer Sauggreiferanordnung, indem das Stellglied 21 durch seinen Antrieb nach oben gezogen wird und über die Hebel 23 die vier äußeren Sauggreiferarme 3 zu einer Schwenkbewegung nach innen veranlasst.

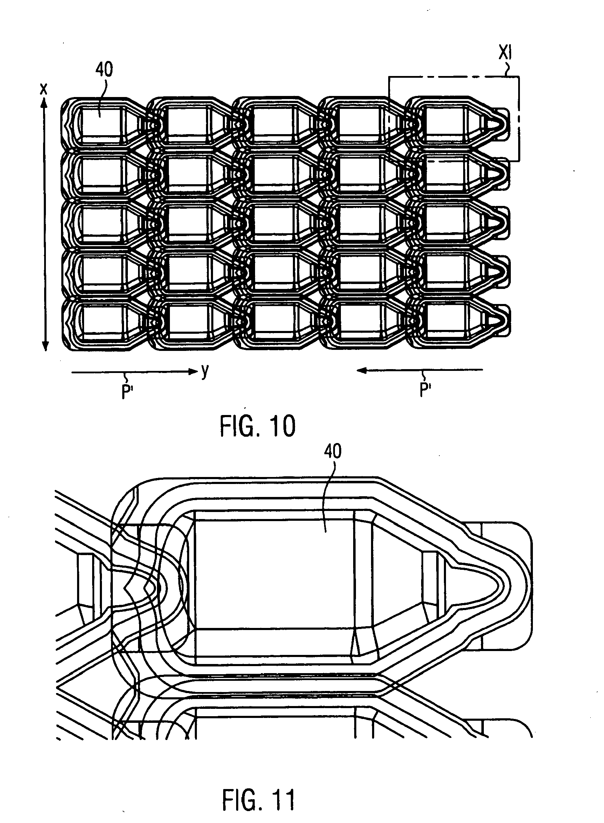

Figur 10 zeigt das Feld oder Array von fünf x fünf Artikeln beziehungsweise Verpackungen 40, nachdem die fünf Spuren von Artikeln 40 nun auch in der y-Richtung überlappt wurden. Zu diesem Zweck werden die Verpackungen 40 in der y-Richtung in der mit den beiden Pfeilen P' angedeuteten Richtung übereinander geschoben. Dies geschieht, indem die fünf Sauggreiferanordnungen 2 (siehe Figur 1) entlang der Führungsstangen 6 im Gestell 5 zueinander geschoben werden. Speziell werden die beiden jeweils äußeren Sauggreiferanordnungen 2 auf die ortsfeste, mittlere Sauggreiferanordnung 2 zu verschoben.

Nun kommt zum Tragen, dass die Anlageflächen 33 der Sauggreifköpfe 4 gegenüber der Horizontalen H geneigt sind, wie in Figur 4 dargestellt. Wegen dieser Neigung stellen sich auch die von den Sauggreifköpfen 4 angesaugten Artikel 40 unter einer leichten Neigung gegenüber der Horizontalen H ein. Dies verhindert, dass die Ränder 43 der Verpackungen 40 einander benachbarter Spuren von Artikeln miteinander kollidieren, wenn die Sauggreiferanordnungen 2 aufeinander zu gefahren werden. Vielmehr führt die Schrägstellung der Artikel 40 dazu, dass sich die Ränder 43 von einer Spur von Verpackungen 40 im Bereich der Tüllen 42 der Verpackungen über die nächstfolgende Spur von Verpackungen 40 schieben, so dass die Verpackungen 40 einander überlappen. Zu erkennen ist dies insbesondere in der Vergrößerung in Figur 11, die den in Figur 10 mit XI bezeichneten Ausschnitt vergrößert darstellt.

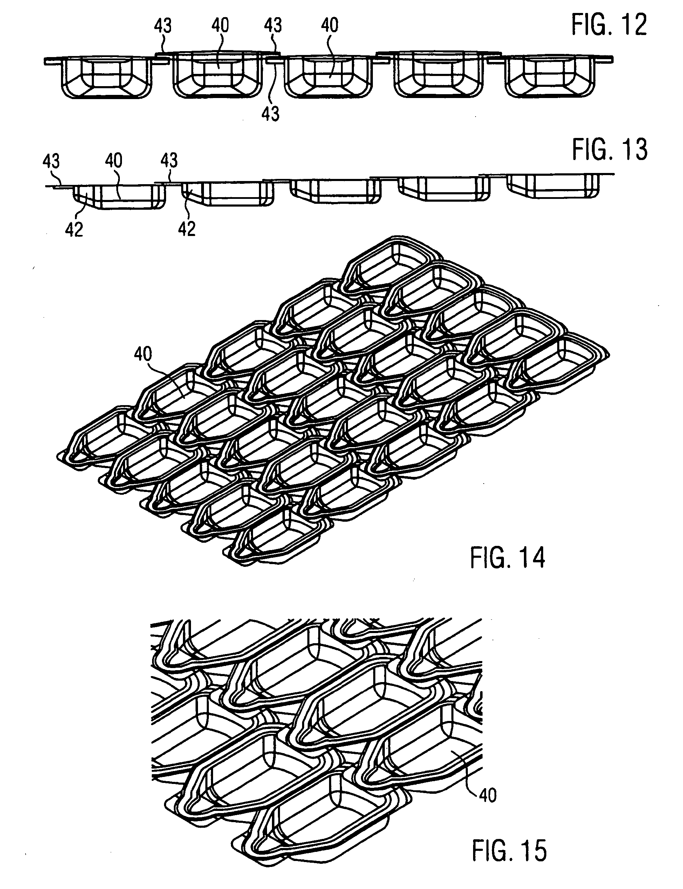

Figur 12 zeigt eine Seitenansicht einer Gruppe von fünf Artikeln 40, die mittels einer fünfköpfigen Sauggreiferanordnung 2 ergriffen wurden und in der in Figur 8 gezeigten Weise durch das Verschwenken der Sauggreiferarme 3 aufeinander zu übereinander geschoben wurden. Bedingt durch den Versatz V zwischen den Ebenen E1, E2 der Anlageflächen 33 der Sauggreifköpfe 4 liegen dabei die Ränder 43 der zweiten und vierten Verpackung 40 auf den Rändern 43 der jeweils benachbarten Verpackungen 40 auf.

Figur 13 zeigt eine Reihe von Verpackungen 40 in einer Betrachtungsrichtung entgegen der x-Richtung. Nach dem Zusammenschieben der Spuren von Verpackungen 40 in der in Figur 10 gezeigten Weise durch Zueinanderfahren der verschiedenen Sauggreiferanordnungen 2 überlappen sich die benachbarten Verpackungen 40 im Bereich der Ränder 43 ihrer Tüllen 42. Begünstigt wird das Erzeugen dieser Überlappung durch die leichte Neigung der Artikel 40, die diese durch die Neigung der Anlageflächen 33 der Sauggreifköpfe 4 erfahren.

Figur 14 zeigt das gesamte Feld von fünf x fünf Verpackungen 40 nach dem Komprimieren in x- und y-Richtung in perspektivischer Ansicht.

Figur 15 zeigt die vordere Ecke des in Figur 14 gezeigten Feldes von fünf x fünf Verpackungen in einer Vergrößerung. Hier ist deutlich zu erkennen, auf welche Weise benachbarte Verpackungen 40 einander überlappen, so dass insgesamt die Außenabmessungen des ganzen Feldes von fünf x fünf Verpackungen minimal werden.

Ausgehend von dem dargestellten Ausführungsbeispiel können das Sauggreifersystem 1 beziehungsweise die erfindungsgemäße Sauggreiferanordnung 2 auf vielfache Weise verändert werden. Beispielsweise ist es denkbar, dass jede Sauggreiferanordnung 2 nicht fünf, sondern eine beliebige andere Anzahl von Sauggreiferarmen 3 mit Sauggreifköpfen 4 aufweist. Ebenso wenig ist es zwingend, dass das gesamte Sauggreifsystem 1 fünf Sauggreiferanordnungen 2 aufweist. Vielmehr könnte auch lediglich eine Sauggreiferanordnung 2 oder eine beliebige andere Anzahl von Sauggreiferanordnungen 2 vorgesehen sein.

Zu beachten ist auch, dass die Erfindung eine Reihe von Merkmalen umfasst, die nicht nur in Kombination miteinander, sondern auch unabhängig voneinander vorteilhaft und folglich eine eigenständige Erfindung sein können. Dies gilt insbesondere für den Versatz V zwischen den Anlageflächen 33 einander benachbarter Sauggreiferarme 3, die Mehrteiligkeit (insbesondere Zweiteiligkeit) der Hebel 23 und/oder der Sauggreiferarme 3, die präzise, vertikale Bewegbarkeit des mittleren Stellglieds 21, insbesondere entlang der Führung 32, den schlüssellosen Schnellverschluss 17 für die Sauggreiferarme 3, die Abdichtung der mehrteiligen Sauggreiferarme 3 mittels der Dichtung 35, den einheitlichen und durchgehen konstanten Querschnitt der Vakuumleitungen 27 durch die Sauggreiferarme 3 sowie die Neigung der Anlageflächen 33 der Sauggreifköpfe 4 gegenüber der Horizontalen H. Diese Merkmale können sowohl einzeln, als auch in beliebiger Kombination miteinander eine Erfindung begründen.

## Patentansprüche

1. Sauggreiferanordnung (2) mit mehreren in einer Reihe angeordneten Sauggreiferarmen (3), die an ihren unteren Enden jeweils einen Sauggreifköpf (4) aufweisen, wobei mindestens einer der Sauggreiferarme (3) über einen Hebel (23) mit einem Stellglied (21) verbunden ist, wobei sowohl zwischen dem Hebel (23) und dem Sauggreiferarm (3), als auch zwischen dem Hebel (23) und dem Stellglied (21) jeweils ein Drehgelenk (24, 25) gebildet ist, und wobei der Hebel (23) aus mindestens zwei Hebelteilen (23c, 23d) zusammengesetzt ist,
**dadurch gekennzeichnet, dass** wenigstens einer, vorzugsweise alle der Sauggreiferarme (3) mehrteilig ausgebildet sind,
und dass ein schlüsselloser Schnellverschluss oder ein Rastverschluss (17) zwischen verschiedenen Abschnitten (3a, 3b) eines mehrteiligen Sauggreiferarms (3) vorgesehen ist.

2. Sauggreiferanordnung nach Anspruch 1, **dadurch gekennzeichnet, dass** die Verbindung zwischen den Hebelteilen (23c, 23d) in Form einer Rastverbindung ausgeführt ist.

3. Sauggreiferanordnung nach einem der vorangehenden Ansprüche, **dadurch gekennzeichnet, dass** die Verbindung zwischen den Hebelteilen (23c, 23d) als Sollbruchstelle oder Soll-Trennstelle (30) ausgebildet ist.

4. Sauggreiferanordnung nach einem der vorangehenden Ansprüche, **dadurch gekennzeichnet, dass** am oder im Schnell- oder Rastverschluss (17) eine Dichtung (35) vorgesehen ist, um das Innere (27) des Sauggreiferarms (3) gegenüber der Umgebung abzudichten.

5. Sauggreiferanordnung (2) nach einem der vorangehenden Ansprüche, **dadurch gekennzeichnet, dass** die Sauggreifköpfe (4) jeweils eine Anlagefläche (33) zur Anlage durch einen an den Sauggreifkopf (4) angesaugten Artikel aufweisen, und die Anlageflächen (33) der Sauggreifköpfe (4) einander benachbarter Sauggreiferarme (3) in unterschiedlichen Ebenen (E1, E2) angeordnet sind.

6. Sauggreiferanordnung nach Anspruch 5, **dadurch gekennzeichnet, dass** der Versatz (V) zwischen den Ebenen (E1, E2) der Anlageflächen (33) der Sauggreifköpfe (4) einander benachbarter Sauggreiferarme (3) von 0,1 mm bis 2,0 mm beträgt.

7. Sauggreiferanordnung nach einem der Ansprüche 5 oder 6, **dadurch gekennzeichnet, dass** die Anlageflächen (33) der Sauggreifköpfe (4) jedes zweiten Sauggreiferarms (3) in einer gemeinsamen Ebene (E1, E2) liegen.

8. Sauggreiferanordnung nach einem der Ansprüche 5 bis 7, **dadurch gekennzeichnet, dass** die Anlageflächen (33) der Sauggreifköpfe (4) geneigt sind gegenüber einer Förderebene (H), von der die Artikel (40) entnommen werden, oder gegenüber einer Ebene einer für wenigstens einige Sauggreiferarme (3) gemeinsamen Basis (18).

9. Sauggreiferanordnung nach Anspruch 8, **dadurch gekennzeichnet, dass** die Neigung (α) ca. 2° bis 10° beträgt, vorzugsweise 3° bis 5°.

10. Sauggreiferanordnung nach einem der vorangehenden Ansprüche, **dadurch gekennzeichnet, dass** die Sauggreiferarme (3), die Hebel (23) und/oder die Basis (18) aus einem Sinterwerkstoff bestehen.

11. Sauggreiferanordnung nach einem der vorangehenden Ansprüche, **dadurch gekennzeichnet, dass** ein Stellglied (21) zum Bewirken einer Schwenkbewegung mehrerer schwenkbarer Sauggreiferarme (3) axial zu einem nicht schwenkbaren, vorzugsweise mittleren Sauggreiferarm (3) beweglich ist.

12. Sauggreiferanordnung nach Anspruch 11, **dadurch gekennzeichnet, dass** das Stellglied (21) entlang einer Führung (32) beweglich ist.

13. Sauggreiferanordnung nach einem der vorangehenden Ansprüche, **dadurch gekennzeichnet, dass** in mindestens einigen Sauggreiferarmen (3) eine Vakuumleitung (27) mit durchgehend konstantem Querschnitt vorgesehen ist.

## Claims

1. Suction gripper arrangement (2), with several suction gripper arms (3) arranged in a row, which at their lower ends each have a suction gripper head (4), wherein at least one of the suction gripper arms (3) is connected to an actuator (21) via a lever (23), wherein both between the lever (23) and the suction gripper arm (3), and also between the lever (23) and the actuator (21) a pivot joint (24, 25) is formed, and wherein the lever (23) is assembled of at least two lever parts (23c, 23d),
**characterized in that** at least one, preferably all suction gripper arms (3) have a multi-part configuration,
and **in that** a keyless quick fastener or latching fastener (17) is provided between different sections (3a, 3b) of a multi-part suction gripper arm (3).

2. Suction gripper arrangement according to claim 1, **characterized in that** the connection between the lever parts (23c, 23d) is implemented in the form of a latching connection.

3. Suction gripper arrangement according to one of the preceding claims, **characterized in that** the connection between the lever parts (23c, 23d) is designed as a predefined breaking point or predefined separation point (30).

4. Suction gripper arrangement according to one of the preceding claims, **characterized in that** at or within the quick-or latching fastener (17) a sealing (35) is provided for sealing the inner space (27) of the suction gripper arms (3) with respect to the surroundings.

5. Suction gripper arrangement (2) according to one of the preceding claims, **characterized in that** each of the suction gripper heads (4) comprises an abutment surface (33) for abutting an article to be sucked onto the suction gripper head (4), and **in that** the abutment surfaces (33) of the suction gripper heads (4) of the suction gripper arms (3) adjacent to each other are arranged in different planes (E1, E2).

6. Suction gripper arrangement according to claim 5, **characterized in that** an offset (V) between the planes (E1, E2) of the abutment surfaces (33) of the suction gripper heads (4) of the suction gripper arms (3) adjacent to each other has a value from 0.1mm to 2.0mm.

7. Suction gripper arrangement according to one of claims 5 or 6, **characterized in that** the abutment surfaces (33) of the suction gripper heads (4) of each second suction gripper arm (3) lie in a common plane (E1, E2).

8. Suction gripper arrangement according to one of claims 5 to 7, **characterized in that** the abutment surfaces (33) of the suction gripper heads (4) are tilted with respect to a transport plane (H) from which the articles (40) are withdrawn, or with respect to a plane of a base (18) which is common for at least some suction gripper arms (3).

9. Suction gripper arrangement according to claim 8, **characterized in that** the tilting a has a value of approximately 2° to 10°, preferably 3° to 5°.

10. Suction gripper arrangement according to one of the preceding claims, **characterized in that** the suction gripper arms (3), the lever (23) and/or the base (18) are comprised of a sinter-compound.

11. Suction gripper arrangement according to one of the preceding claims, **characterized in that** an actuator (21) is axially movable for effecting a swivelling movement of several swivable suction gripper arms (3) with respect to a non-swivable gripper arm (3), preferably a central suction gripper arm (3).

12. Suction gripper arrangement according to claim 11, **characterized in that** the actuator (21) is movable along a guide (32).

13. Suction gripper arrangement according to one of the preceding claims, **characterized in that** in at least some of the suction gripper arms (3) a vacuum duct (27) having a constant cross-section is provided.

## Revendications

1. Agencement de préhenseur à aspiration (2) comprenant plusieurs bras de préhenseur à aspiration (3) qui sont agencés selon une rangée et présentent à leurs extrémités inférieures, chacun, une tête de préhension à aspiration (4), agencement
dans lequel au moins l'un des bras de préhenseur à aspiration (3) est relié à un organe de réglage (21) par l'intermédiaire d'un levier (23),
dans lequel, aussi bien entre le levier (23) et le bras de préhenseur à aspiration (3), qu'entre le levier (23) et l'organe de réglage (21), est formée respectivement une articulation en rotation (24, 25), et
dans lequel le levier (23) est composé d'au moins deux parties de levier (23c, 23d),
**caractérisé**
**en ce qu'**au moins un, de préférence tous les bras de préhenseur à aspiration (3) sont d'une configuration en plusieurs parties,
et **en ce qu'**il est prévu un raccord de liaison rapide sans clé ou un raccord de liaison par encliquetage (17) entre différents tronçons (3a, 3b) d'un bras de préhenseur à aspiration (3) en plusieurs parties.

2. Agencement de préhenseur à aspiration selon la revendication 1, **caractérisé en ce que** la liaison entre les parties de levier (23c, 23d) est réalisée sous la forme d'une liaison par encliquetage.

3. Agencement de préhenseur à aspiration selon l'une des revendications précédentes, **caractérisé en ce que** la liaison entre les parties de levier (23c, 23d) est réalisée sous la forme d'une zone à rupture programmée ou d'une zone de sectionnement programmé (30).

4. Agencement de préhenseur à aspiration selon l'une des revendications précédentes, **caractérisé en ce que** dans ou sur le raccord de liaison rapide ou par encliquetage (17), est prévu un joint d'étanchéité (35), pour rendre étanche l'intérieur (27) du bras de préhenseur à aspiration (3) par rapport à l'environnement.

5. Agencement de préhenseur à aspiration (2) selon l'une des revendications précédentes, **caractérisé en ce que** les têtes de préhension à aspiration (4) présentent chacune une surface d'appui (33) contre laquelle vient s'appuyer un article ayant été aspiré contre la tête de préhension à aspiration (4), et les surfaces d'appui (33) des têtes de préhension à aspiration (4) de bras de préhenseur à aspiration (3) mutuellement voisins, sont agencées dans des plans (E1, E2) différents.

6. Agencement de préhenseur à aspiration selon la revendication 5, **caractérisé en ce que** le décalage (V) entre les plans (E1, E2) des surfaces d'appui (33) des têtes de préhension à aspiration (4) de bras de préhenseur à aspiration (3) mutuellement voisins, prend une valeur de 0,1 mm à 2,0 mm.

7. Agencement de préhenseur à aspiration selon l'une des revendications 5 ou 6, **caractérisé en ce que** les surfaces d'appui (33) des têtes de préhension à aspiration (4) de chaque deuxième bras de préhenseur à aspiration (3), se situent dans un plan commun (E1, E2).

8. Agencement de préhenseur à aspiration selon l'une des revendications 5 à 7, **caractérisé en ce que** les surfaces d'appui (33) des têtes de préhension à aspiration (4) sont inclinées par rapport à un plan de transport (H) duquel sont prélevés les articles (40), ou bien par rapport à un plan d'une base (18) commune pour au moins quelques bras de préhenseur à aspiration (3).

9. Agencement de préhenseur à aspiration selon la revendication 8, **caractérisé en ce que** l'inclinaison (α) vaut environ 2° à 10°, de préférence 3° à 5°.

10. Agencement de préhenseur à aspiration selon l'une des revendications précédentes, **caractérisé en ce que** les bras de préhenseur à aspiration (3), les leviers (23) et/ou la base (18) sont réalisés en un matériau fritté .

11. Agencement de préhenseur à aspiration selon l'une des revendications précédentes, **caractérisé en ce qu'**un organe de réglage (21) destiné à produire un mouvement de pivotement de plusieurs bras de préhenseur à aspiration (3) pivotants, est mobile axialement par rapport à un bras de préhenseur à aspiration (3), de préférence central, non pivotant.

12. Agencement de préhenseur à aspiration selon la revendication 11, **caractérisé en ce que** l'organe de réglage (21) est mobile le long d'un guidage (32).

13. Agencement de préhenseur à aspiration selon l'une des revendications précédentes, **caractérisé en ce que** dans au moins certains bras de préhenseur à aspiration (3), est prévue une conduite de vide (27) 5 avec une section transversale constante sur toute son étendue.
